# EUROPEAN PATENT APPLICATION

(11) **EP 3 056 363 A2**
(43) Date of publication of application: **17.08.2016**
(21) Application number: 16151233.0
(22) Date of filing: 14.01.2016
(51) Int. Cl.: B60C 29/02

(54) **CLAMP-IN-VALVE-EQUIPPED WHEEL**

(30) Priority: 20.01.2015 JP 2015008378
(71) Applicant: HONDA MOTOR CO., LTD., Tokyo, 107-8556 (JP)
(72) Inventor: TAKATSUKA, Kazuhiro, SAITAMA, 351-0193 (JP)
(74) Representative: Brevalex

(57) **Abstract**

To provide a clamp-in-valve-equipped wheel which allows reductions in the size and weight of an air valve (clamp-in valve) while taking measures to prevent the turning of a nut.

A rim-side engaging portion 26 is provided on a rim 22, and a valve-side engaging portion 52 is provided on a flange portion 46 of a valve body 41. A clamp-in valve 40 is mounted by causing the valve-side engaging portion (flat surface portion) 52 provided on the flange portion 46 to abut on a rim-side engaging portion (flat surface portion) 29.

The valve-side engaging portion (flat surface portion) 52 abuts on the rim-side engaging portion (flat surface portion) 29, thereby preventing the flange portion 46 from turning. Since the turning is prevented without doubling (double stacking) the nut 43 or increasing the diameter of an externally threaded portion 45, reductions in the size and weight of the clamp-in valve 40 can be achieved.

## Description

### Technical Field

The present invention relates to a clamp-in-valve-equipped wheel which is equipped with a clamp-in valve, a kind of air valves.

### Background Art

An air valve is equipped with a rim of a wheel for refilling a tire with air. A snap-in valve and a clamp-in valve defined by JIS-D 4207 "tire valves for automobiles" are known as air valves.

The snap-in valve is a valve of a type that a valve body is fixed to the rim by the elastic force of rubber. On the other hand, the clamp-in valve is a valve of a type that a valve body is fixed to the rim by the clamping force (axial force) of a nut.

Various forms of the clamp-in-valve-equipped wheel equipped with this clamp-in valve have been proposed (for example, see Fig. 3 of Patent Literature 1).

As shown in Fig. 3 of the Patent Literature 1, an air valve (17) is mounted sideways on a spoke-side portion (14a) of a wheel (11) (the parenthesized numbers correspond to reference signs described in Patent Literature 1, hereinafter described in the same manner). The air valve (17) is equipped with a flange (18), a screw cylinder (19), and nuts (20) threaded onto the screw cylinder (19), and fixed to the spoke-side portion (14a) by sandwiching the spoke-side portion (14a) between the flange (18) and the nuts (20).

The wheel (11) is subjected to vibration from a vehicle body and a road surface. It is necessary to prevent the nuts (20) from turning and coming loose due to this vibration.

In the Patent Literature 1, the nut (20) is superposed on the nut (20), thereby taking measures to prevent the turning. The measures are called the double-nut structure, in which the air valve (17) is increased in length and size.

While the air valve (17) is shortened in the case of a structure by which it is fixed by the single nut (20), it is necessary to increase the outer diameter of the screw cylinder (19) in order to increase the axial force. The increase in outer diameter causes an increase in the size of the air valve (17).

However, there is a need for a reduction in the weight of the wheel as improvements in the fuel efficiency of vehicles are expected. Under such circumstances, a reduction in the weight of the air valve (17) is desired.

### Citation List

### Patent Literature

[Patent Literature 1] JP-A No. S63-297110

### Summary of Invention

### Technical Problem

Accordingly, an object of the present invention is to provide a clamp-in-valve-equipped wheel which allows reductions in the size and weight of an air valve (clamp-in valve) while taking measures to prevent the turning of a nut.

### Solution to Problem

According to a feature of the invention according to Claim 1, provided is a clamp-in-valve-equipped wheel which is mounted with a clamp-in valve of a type that a valve body is fixed to a rim of a wheel by partially inserting the valve body into a valve mounting hole provided in the rim and threading a nut onto the valve body, wherein:
the valve body is equipped with a valve-side engaging portion; the rim is equipped with a rim-side engaging portion; and the valve-side engaging portion is engaged with the rim-side engaging portion, thereby preventing the valve body from turning.

A feature of the invention according to Claim 2 is that the valve-side engaging portion is a flat surface portion provided on an outer periphery of the valve body, and the rim-side engaging portion is a protruding portion extending from the rim.

A feature of the invention according to Claim 3 is that the protruding portion includes at least two columnar protrusions arranged along the flat surface portion.

A feature of the invention according to Claim 4 is that, with the wheel mounted on a vehicle, the plurality of columnar protrusions are arranged in aligned relation in a longitudinal direction of the vehicle.

A feature of the invention according to Claim 5 is that the wheel is equipped with a center rib that extends toward a wheel center in the center of a width direction of the rim, the center rib being integrally formed with the protruding portion.

A feature of the invention according to Claim 6 is that: the clamp-in valve is equipped with a bent portion on the valve body; the valve mounting hole is provided so as to be offset in the width direction from the center of the width direction of the rim; and the clamp-in valve has a center of gravity, the center of gravity substantially matching the center of the width direction of the rim.

A feature of the invention according to Claim 7 is that the valve mounting hole is provided so as to be offset in the width direction from the center of the width direction of the rim, and the clamp-in valve is equipped with: a bent portion; and a laterally extending portion extending laterally from the bent portion, the laterally extending portion being mounted so as to straddle the center rib.

### Advantageous Effects of Invention

According to the invention of Claim 1, the rim-side engaging portion is provided on the rim, and the valve-side engaging portion is provided on the valve body. The valve-side engaging portion is engaged with the rim-side engaging portion, thereby preventing the valve body from turning. It is therefore unnecessary to increase the length and diameter of the valve body in order to prevent the turning. As a result, it is possible to reduce the length and diameter of the valve body, thereby allowing reductions in the size and weight of the valve body.

Thus, according to the present invention, provided is the clamp-in-valve-equipped wheel which allows reductions in the size and weight of the clamp-in valve while taking measures to prevent the turning of the nut.

According to the invention of Claim 2, the valve-side engaging portion is the flat surface portion, and the rim-side engaging portion is the protruding portion. By causing the protruding portion to abut on the flat surface portion, turning can be prevented. The flat surface portion can be easily formed on the valve body, and the protruding portion can be easily integrally formed on the rim. Thus, a structure for preventing the turning is provided without increasing cost.

According to the invention of Claim 3, the protruding portion includes two or more columnar protrusions. Thus, reductions in size and weight can be achieved.

According to the invention of Claim 4, the plurality of columnar protrusions are arranged in aligned relation in the longitudinal direction of the vehicle. The flat surface portion abuts on the columnar protrusions from the lateral side of the wheel, thereby facilitating the mounting of the valve body to the wheel.

According to the invention of Claim 5, the wheel is equipped with the center rib extending toward the wheel center in the center of the width direction of the rim, and the center rib allows an improvement in designability. In addition, the protruding portion is integrally formed on the center rib, thereby eliminating the need for newly providing a protruding portion. That is, the costs for forming the protruding portion by taking advantage of the center rib can be reduced.

According to the invention of Claim 6, the clamp-in valve is equipped with the bent portion on the valve body. The valve mounting hole is provided so as to be offset in the width direction from the center of the width direction of the rim. The center of gravity of the clamp-in valve substantially matches the center of the width direction of the rim.

In the configuration in Fig. 3 of the Patent Literature 1, the air valve (17) becomes a cause of out-of-balance, although only slightly. In this regard, according to the present invention, an excellent balance of the wheel can be offered even through the valve body is equipped with the bent portion.

According to the invention of Claim 7, the valve mounting hole is provided so as to be offset in the width direction from the center of the width direction of the rim, and the clamp-in valve is equipped with the bent portion and the laterally extending portion, the laterally extending portion being mounted so as to straddle the center rib.

Since it is unnecessary to form a notch in the center rib, it is possible to maintain the designability of the center rib while avoiding performance deterioration caused by the notch.

Additionally, an excellent balance of the wheel can be offered even though the valve body is equipped with the bent portion.

### Brief Description of Drawings

[Fig. 1] Fig. 1 is a front view of a clamp-in-valve-equipped wheel according to the present invention.
[Fig. 2] Fig. 2 is a sectional view taken along line 2-2 of Fig. 1.
[Fig. 3] Fig. 3 is a view in the direction of the arrow 3 in Fig. 2.
[Fig. 4] Fig. 4 is a view in the direction of the arrow 4 in Fig. 2.
[Fig. 5] Fig. 5 is a sectional view of the essential parts of the clamp-in-valve-equipped wheel.
[Fig. 6] Fig. 6 is a view illustrating a columnar protrusion.
[Fig. 7] Fig. 7 is a sectional view of the essential parts of a wheel according to a modification.
[Fig. 8] Fig. 8 is a sectional view of the essential parts of a clamp-in-valve-equipped wheel according to the modification.
[Fig. 9] Fig. 9 is a front view of the wheel with a center rib.
[Fig. 10] Fig. 10 is a sectional view taken along line 10-10 of Fig. 9.
[Fig. 11] Fig. 11 is a sectional view of the essential parts of the wheel with the center rib.

### Description of Embodiments

Hereinafter, an embodiment of the present invention will be described with reference to the accompanying drawings. It is to be noted that the attached drawings shall be viewed in the direction of reference signs.

### [Embodiment]

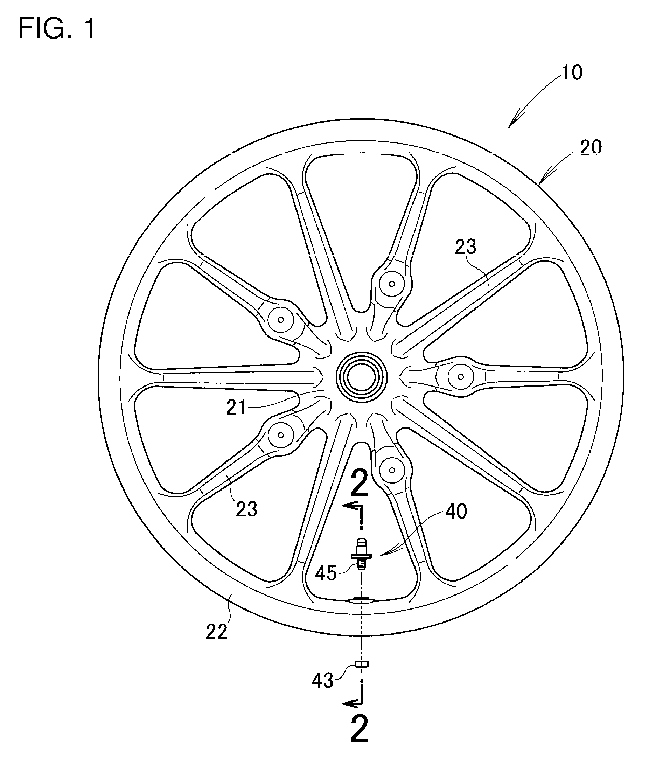

As shown in Fig. 1, a clamp-in-valve-equipped wheel 10 includes a wheel 20 and a clamp-in valve 40.

The wheel 20 includes: a central hub 21; an annular rim 22 that surrounds the hub 21; and a plurality of spokes 23 that extend radially from the hub 21 and are connected to the rim 22. In this example, the hub 21, the spokes 23, and the rim 22 are integrally formed by casting. The wheel 20 of this kind is called the cast wheel.

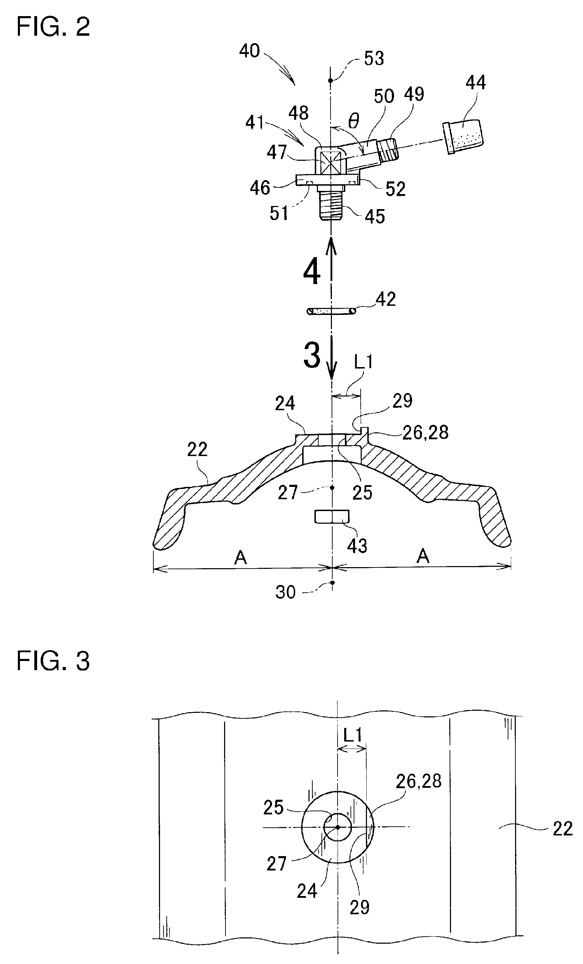

As shown in Fig. 2, the rim 22 is provided with a valve seat 24, a valve mounting hole 25, and a rim-side engaging portion 26.

The clamp-in valve 40 is composed of a valve body 41, an O-ring 42 serving as a seal material, a single nut 43, and a cap 44.

The valve body 41 has: an externally threaded portion 45 that is inserted into the valve mounting hole 25 and onto which the nut 43 is threaded; a flange portion 46 that is provided on the base side of the externally threaded portion 45; a spanner hanging portion 47 that is provided in the vicinity of the flange portion 46; a bent portion 48 that is bent at an angle θ in the range of 45° to 90° with respect to a valve center 53 corresponding to the central axis 27 of the valve mounting hole 25; a laterally extending portion 50 that extends laterally from the bent portion 48; and an externally threaded portion 49 that is provided at the leading end of the laterally extending portion 50 and onto which the cap 44 is threaded. The central axis 27 of the valve mounting hole 25 is disposed in the center of the rim 22 of the width indicated by (A + A), that is, a wheel center 30.

It should be noted that the valve body 41 may be a part having a straight shape without the bent portion 48 (that is, the angle θ is 0).

As shown in Fig. 3, the rim-side engaging portion 26 is an approximately half-moon-shaped protruding portion 28 which is integrally formed on an edge of the circular (doughnut-shaped) valve seat 24. The protruding portion 28 has a flat surface 29 at a portion a distance L1 from the central axis 27 of the valve mounting hole 25.

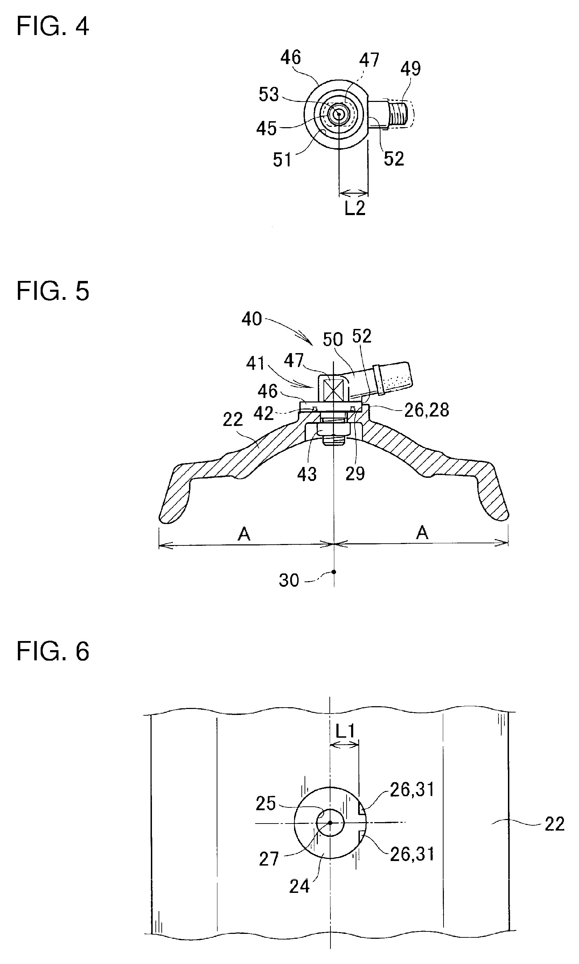

As shown in Fig. 4, an O-ring groove 51, and a flat surface portion 52, which serves as a valve-side engaging portion, are cut and formed in the disc-shaped flange portion 46. The flat surface portion 52 is formed at a portion a distance L2 from the valve center 53. The distance L2 is set the same size as or shorter (for example, by about 0.1 mm) than the distance L1 shown in Fig. 3.

Next, the mounting procedure of the clamp-in valve 40 to the wheel 20 will be described.

Referring to Fig. 2, the O-ring 42 is fitted into the O-ring groove 51 in the undersurface of the flange portion 46. Then, with the flat surface portion 52 of the flange portion 46 aligning against the flat surface 29 of the protruding portion 28, the externally threaded portion 45 is inserted into the valve mounting hole 25. Then the nut 43 is loosely threaded onto the externally threaded portion 45. And then, a spanner is hung on the spanner hanging portion 47 to tighten the nut 43 with a predetermined torque while preventing the turning of the valve body 41.

Consequently, as shown in Fig. 5, the clamp-in valve 40 is fixed to the rim 22. The valve-side engaging portion (flat surface portion) 52 provided on the flange portion 46 abuts on the rim-side engaging portion (flat surface portion) 29, thereby preventing the turning of the flange portion 46. Since the turning is prevented without doubling (double stacking) the nut 43 or increasing the diameter of the externally threaded portion 45, reductions in the size and weight of the clamp-in valve 40 can be achieved.

It should be noted that the rim-side engaging portion 26 may have any shape, and, for example, the rim-side engaging portion 26 may be two columnar protrusions 31 separated from each other as shown in Fig. 6. In the case of the columnar protrusions 31, the weight is reduced by a cutout central portion. The columnar protrusions 31 only need to be aligned, and may include three or more protrusions. Furthermore, the columnar protrusions 31 may be of simple cylindrical or prismatic shape (including a polygonal shape).

Next, a modification will be described.

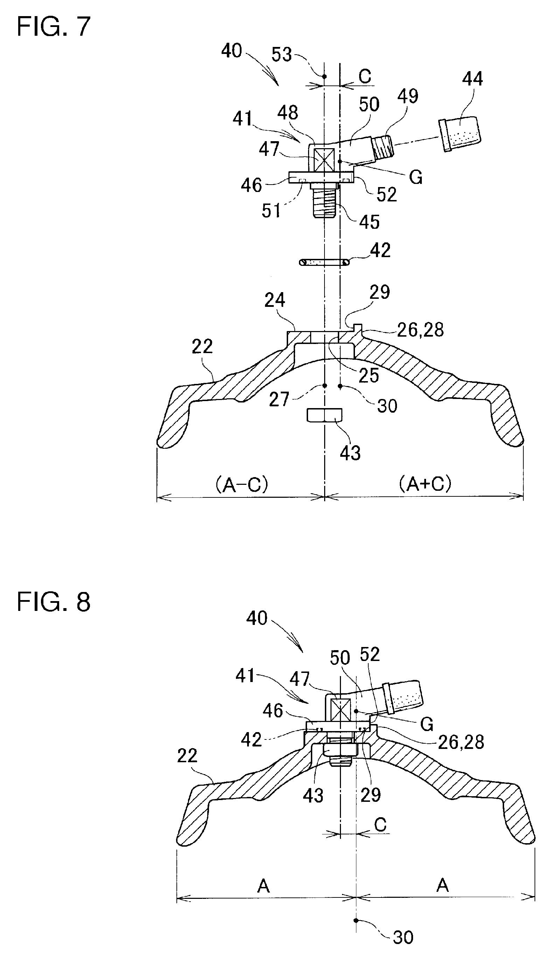

As shown in Fig. 7, the clamp-in valve 40 includes the bent portion 48 and therefore has the center of gravity G at a location a distance C from the valve center 53. The rim 22 is provided with the valve mounting hole 25 in a portion thereof offset the distance C from the width center. Other configurations are the same as those in Fig. 2 and, therefore, the detailed description will be omitted by using the reference signs applied to Fig. 2.

As shown in Fig. 8, the center of gravity G of the clamp-in valve 40 is located in the width center of the rim 22, thereby improving the weight balance of the rim 22, resulting in an excellent weight balance of the clamp-in-valve-equipped wheel.

Next, the wheel with a center rib will be described. The center rib is a rib provided in the center of the width direction of the rim 22, which performs the functions of increasing the strength while enhancing designability.

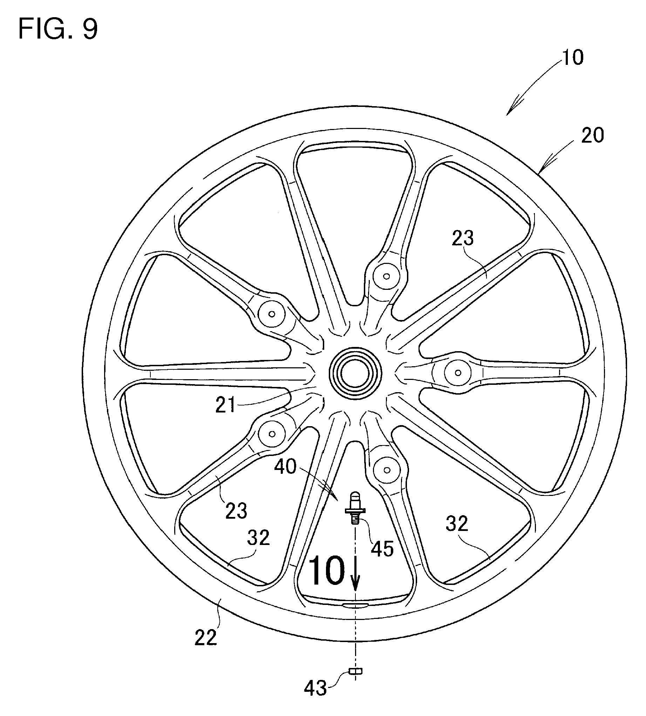

That is, as shown in Fig. 9, the wheel 20 is attached with a center rib 32 on the inner peripheral surface of the rim 22, the center rib 32 extending toward the center (that is, the hub 21) of the wheel 20.

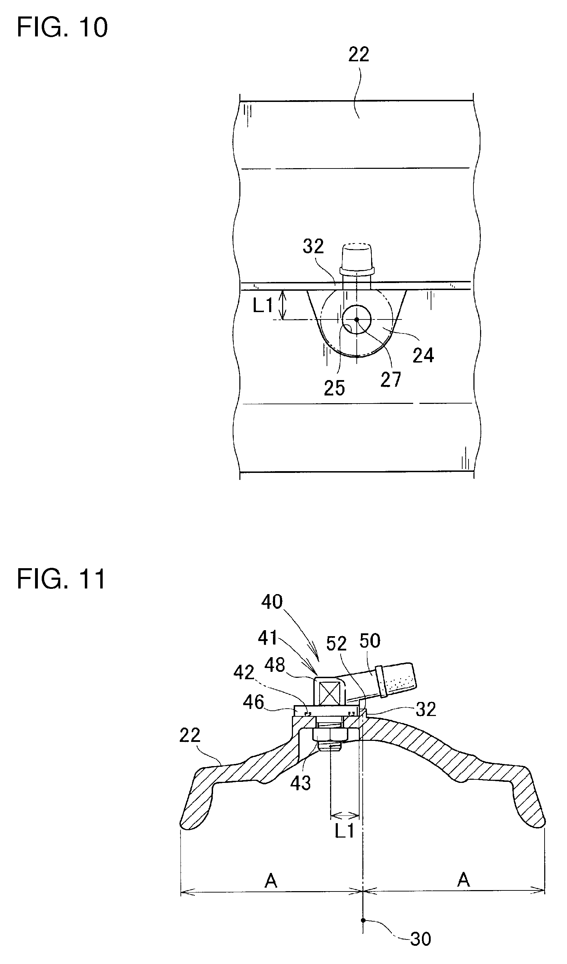

As shown in Fig. 10, the valve seat 24 is formed in contact with the center rib 32, and the valve mounting hole 25 is provided in a portion the distance L1 from the center rib 32.

As shown in Fig. 11, the valve-side engaging portion (flat surface portion) 52 is located along the center rib 32. That is, the center rib 32 also serves as the rim-side engaging portion, thereby eliminating the need for newly providing a rim-side engaging portion.

Furthermore, the valve body 41, ahead of the bent portion 48, straddles the center rib 32. Therefore, as shown in Fig. 10, it is unnecessary to provide a notch in the center rib 32, and the good appearance quality of the center rib is maintained. In addition, the valve body 41, ahead of the bent portion 48, straddles the center rib 32, thereby allowing an improvement in the weight balance of the rim 22.

It should be noted that the clamp-in-valve-equipped wheel is suitable for motorcycles particularly required to be lightweight, but also applicable to three-wheeled vehicles and four-wheeled vehicles.

Furthermore, the wheel may have any form including a spoke wheel in addition to the so-called cast wheel.

### [Industrial Applicability]

The clamp-in-valve-equipped wheel according to the present invention is particularly suitable for motorcycles required to be lightweight.

### Reference Signs List

- 10: Clamp-in-valve-equipped wheel
- 20: Wheel
- 22: Rim
- 25: Valve mounting hole
- 26: Rim-side engaging portion
- 28: Protruding portion
- 30: Wheel center
- 31: Columnar protrusion
- 32: Center rib
- 40: Clamp-in valve
- 41: Valve body
- 43: Nut
- 46: Flange portion
- 48: Bent portion
- 50: Laterally extending portion
- 52: Valve-side engaging portion (flat surface portion)
- C: Offset quantity
- G: Center of gravity of the valve

## Claims

1. A clamp-in-valve-equipped wheel (10) which is mounted with a clamp-in valve (40) of a type that a valve body (41) is fixed to a rim (22) of a wheel (20) by partially inserting the valve body (41) into a valve mounting hole (25) provided in the rim (22) and threading a nut (43) onto the valve body (41), wherein:
the valve body (41) is equipped with a valve-side engaging portion (52);
the rim (22) is equipped with a rim-side engaging portion (26); and
the valve-side engaging portion (52) is engaged with the rim-side engaging portion (26), thereby preventing the valve body (41) from turning.

2. The clamp-in-valve-equipped wheel according to Claim 1, wherein:
the valve-side engaging portion (52) is a flat surface portion (52) provided on an outer periphery of the valve body (41); and
the rim-side engaging portion (26) is a protruding portion (28) extending from the rim (22).

3. The clamp-in-valve-equipped wheel according to Claim 2, wherein the protruding portion (28) includes at least two columnar protrusions (31) arranged along the flat surface portion (52).

4. The clamp-in-valve-equipped wheel according to Claim 3, wherein, with the wheel (20) mounted on a vehicle, the plurality of columnar protrusions (31) are arranged in aligned relation in a longitudinal direction of the vehicle.

5. The clamp-in-valve-equipped wheel according to Claim 2, wherein the wheel (20) is equipped with a center rib (32) that extends toward a wheel center in the center of a width direction of the rim (22), the center rib (32) being integrally formed with the protruding portion (28).

6. The clamp-in-valve-equipped wheel according to any one of Claims 1 to 5, wherein:
the clamp-in valve (40) is equipped with a bent portion (48) on the valve body (41);
the valve mounting hole (25) is provided so as to be offset in the width direction from the center of the width direction of the rim (22); and
the clamp-in valve (40) has a center of gravity, the center of gravity substantially matching the center of the width direction of the rim (22).

7. The clamp-in-valve-equipped wheel according to Claim 5, wherein:
the valve mounting hole (25) is provided so as to be offset in the width direction from the center of the width direction of the rim (22); and
the clamp-in valve (40) is equipped with a bent portion (48), and a laterally extending portion (50) extending laterally from the bent portion (48), the laterally extending portion (50) being mounted so as to straddle the center rib (32).
